# FASCICULE DE BREVET EUROPEEN

(11) **EP 1 332 101 B1**
(45) Date de publication et mention de la délivrance du brevet: **02.02.2005**
(21) Numéro de dépôt: 01993571.7
(22) Date de dépôt: 08.11.2001
(51) Int. Cl.: B65G 47/248, B65G 15/12, B65G 47/14, G01N 21/952

(54) **DISPOSITIF DE MISE EN DEFILEMENT CONTINU D'OBJETS A SYMETRIE DE REVOLUTION - APPLICATION A L'INSPECTION VISUELLE ET AU CONTROLE**
Vorrichtung zum kontinuierlichen Aufreihen rotationssymmetrischer Gegenstände - Verwendung zur visuellen Inspektion und Kontrolle
DEVICE FOR CONTINUOUSLY ALIGNING OBJECTS WITH ROTATIONAL SYMMETRY - USE FOR VISUAL INSPECTION AND CONTROL

(30) Priorité: 09.11.2000 FR 0014410
(43) Date de publication de la demande: 06.08.2003
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: MERGY, Marc, F-92100 BOULOGNE (FR); LECOMTE, Jean-Luc, F-77120 MOUROUX (FR); LETELLIER, Laurent, F-91370 VERRIERES-LE-BUISSON (FR); LARUE, Jean-François, F-38500 VOIRON (FR)
(74) Mandataire: Ilgart, Jean-Christophe
(86) Numéro de dépôt international: PCT/FR2001/003462
(87) Numéro de publication internationale: WO 2002/038474

(56) Documents cités:
- DE-A- 3 641 359
- US-A- 4 707 251
- US-A- 4 747 480
- US-A- 5 249 912

## Description

L'objet de l'invention est un dispositif de mise en défilement continu d'objets à symétrie de révolution. Une des applications visées est l'inspection d'objets cylindriques à cadence élevée.

La mise en défilement signifie ici un mouvement combiné de translation et de rotation : les objets tournent en même temps qu'ils avancent, par exemple pour présenter toute leur surface latérale (cylindrique par exemple) à des capteurs permettant un contrôle d'aspect ou de caractéristiques. On souhaite un dispositif autorisant un débit important des objets sur une chaîne de production ou de contrôle, en limitant au maximum les manipulations de ces objets qui peuvent se suivre de manière très rapprochée les uns derrière les autres, dans un flux continu. Le type de mouvement recherché doit donc assurer à la fois la continuité du flux de production et celle du déplacement de chaque objet. Le dispositif répondant à ce problème devra garantir la régularité du défilement - qui doit être parfaitement continu simultanément en translation suivant l'axe principal de l'objet, et en rotation autour de cet axe - pour permettre par exemple un contrôle de bonne qualité (images obtenues de bonne qualité dans l'application d'inspection visuelle), même à cadence élevée, malgré les contraintes imposées sur la vitesse de défilement des objets. La conception d'un tel dispositif doit être fondée sur un principe simple, et son fonctionnement facile à régler.

Les dispositifs de convoyage à bande sans fin ou autres sont bien connus, mais la nécessité de faire tourner les objets simultanément à leur translation, après les avoir orientés correctement, pose des problèmes particuliers. La réalisation d'un système entraînant à la fois des objets en rotation et en translation n'est pas évidente car si l'on applique deux forces différentes sur l'objet, le mouvement de rotation et celui de translation se' contrarient, conduisant à des frottements nuisant à la régularité du mouvement final. Une solution existe néanmoins dans les machines-outils de rectification « centerless » qui impriment à des pièces cylindriques un mouvement rotatif par un frottement exercé de biais. Dans ce cas, les pièces se déplacent' aussi longitudinalement. Mais ceci n'est possible qu'avec des pièces suffisamment longues. De plus, la continuité du flux des pièces n'est pas assurée.

Ce principe est repris dans certains systèmes d'inspection comme celui breveté par la société Rohrer Inc (US) - Brevet US5249912 « Inspection apparatus » publié le 5/10/1993. Le double mouvement est alors donné à l'objet cylindrique grâce à une bande entraînant par frottement les objets en rotation et un (double) guide au dessus et en travers de cette bande obligeant ces objets à un mouvement de translation. L'application visée par ce brevet était un contrôle par courants de Foucault. La solution exposée dans ce brevet consiste à orienter les objets cylindriques en les faisant glisser sous un chemin en gouttière renversée qui maintient leurs axes alignés avec la direction de défilement, et la rotation est assurée en faisant passer les objets sur une bande sans fin qui se meut en direction latérale (sans être toutefois perpendiculaire) et leur impose de rouler.

Ce système comporte malheureusement des limitations dues aux frottements entre les objets et le guide. Ces frottements empêchent un mouvement hélicoïdal parfaitement régulier à une cadence élevée. En effet, le mouvement simultané de rotation/translation imposé par la bande sans fin à un objet butant sur un guide, ,quel qu'il soit, génère obligatoirement des frottements entre l'objet et ce guide (gouttière renversée dans le brevet mentionné précédemment), ce qui perturbe la régularité de ce mouvement et peut amener des saccades et vibrations sur l'objet, surtout à haute cadence. Ces frottements et leur conséquences perturbatrices peuvent alors, dans le cas d'une inspection visuelle par exemple, brouiller les images de l'objet qui seraient prises avec un détecteur de nature optique. Dans ce cas et particulièrement à haute cadence, ce dispositif ne permet pas d'obtenir des images de très bonne qualité nécessaires à un contrôle performant. De plus si des pièces très abîmées se présentent, elles peuvent alors être entraînées très irrégulièrement, le mouvement de rotation étant très contrarié, voire carrément stoppé. La pièce est très mal entraînée car non seulement les frottements parasites contre le guidé affectent son mouvement, mais de plus cette pièce n'a qu'une seule ligne de contact' avec la bande. Enfin l'espace disponible pour loger les capteurs d'inspection est réduit par la présence du guide (par exemple un rail, simple ou double), et risque d'être insuffisant pour des applications de contrôle avec d'autres capteurs que celui décrit dans le brevet Rohrer.

Le dispositif selon l'invention vise à améliorer la mise en défilement, et notamment à résoudre complètement ces problèmes de frottements perturbateurs, en supprimant les défauts inhérents aux dispositifs antérieurs.

### Exposé de l'invention

La présente invention propose un dispositif de mise en défilement continu d'objets à symétrie de révolution comprenant un convoyeur, caractérisé en ce que le convoyeur comprend deux guides (tels que des cylindres ou sabres arrondis) parallèles, et au moins une paire de bandes respectivement tendues sur les guides, entre et sur lesquelles ces objets circulent au niveau des guidés, ces bandes formant un angle (11) entre une piste supérieure et une piste inférieure de chacune des bandes, les bandes de la paire ayant un même sens de rotation autour des guides, une même valeur de l'angle (11) mesurée de la piste supérieure à la piste inférieure, et une même vitesse de déplacement.

Pour simplifier l'exposé, on appellera dans ce qui suit "guides-bande" les deux guides parallèles recouverts de portions de bandes en déplacement, pour exprimer que les objets ne sont jamais en contact direct avec les guides mais seulement avec les portions de bandes en mouvement recouvrant ces guides. Chaque guide-bande forme un angle α (non droit) avec la portion de bande qu'il guide ; cet angle dépendant directement de l'angle 11.

L'écartement entre ces deux guides-bande est ajustable et permet de former un guide naturel en V pour les objets qui sont entraînés de deux côtés par le système de bandes à la fois en rotation, et en translation dans l'axe de ce guide naturel. Le ratio translation/rotation dépend, de l'angle (11) et peut être ajusté par une orientation variable de la bande par rapport à son guide.

Dans cette solution il n'y a plus de frottement parasite entre la pièce à entraîner/contrôler et un guide artificiel sur lequel elle viendrait buter, gênant par son principe, même, la simultanéité des mouvement de rotation et translation. Les objets sont alors déplacés de façon homogène, et le contrôle peut s'exercer même à cadence élevée, sans saccades ou vibrations. Dans le cas où une inspection visuelle est effectuée, il en résulte des images de très bonne qualité.

Le dispositif selon l'invention améliore l'entraînement des objets non seulement par la suppression des saccades ou vibrations, mais aussi par une surface de contact plus grande, et mieux répartie en plusieurs zones homocinétiques (au moins deux arêtes de l'objet, au lieu d'une seule ligne de contact), entre l'objet et les surfaces d'entraînement, ce qui conforte la régularité du mouvement hélicoidal même pour des pièces abîmées. Les objets étant canalisés par l'écartement entre les guides-bande parallèles, celui-ci, réglable, sera choisi de façon à entraîner/guider au mieux les objets en fonction de leur diamètre. Cet écartement est choisi d'autant plus grand que les objets sont plus gros, de manière à avoir à la fois une meilleure canalisation des objets qui reposeront le plus profondément dans le guide en V naturellement formé par les deux portions de bande, et également un meilleur entraînement par les portions de bandes qui auront une meilleure prise sur les objets avec un plus grand écartement.

Enfin l'espace disponible pour loger des capteurs quelconques ou d'autres dispositifs utiles est complètement dégagé autour des objets, sur plus de 180 degrés de leur surface latérale, la présence d'un guide artificiel pour les objets ayant complètement disparu.

Selon une réalisation préférentielle de ce dispositif de mise en défilement objet de l'invention, les bandes de la paire appartiennent à une même boucle continue, les pistes inférieures comme les pistes supérieures étant en prolongement, deux pistes de raccordement reliant respectivement les pistes inférieures et les pistes supérieures. Par ce recours à une unique bande de roulement, le synchronisme des vitesses de déplacement au niveau des guides-bande est obtenu de manière simple et fiable.

L'application d'un tel dispositif à l'inspection optique des objets se fait en adjoignant une source de lumière éclairant l'objet au moins selon une génératrice, un capteur d'image couvrant le champ de la génératrice, et éventuellement un capteur, par exemple optique, apte à signaler à la caméra qu'un objet vient d'être positionné dans son champ. Ce capteur, facultatif, est situé sur le cheminement des objets, transversalement à leur déplacement.

Cette application à l'inspection optique met à profit une caractéristique générale de l'invention : l'espace disponible dégagé autour des objets.

### Brève description des dessins

Une réalisation préférée de l'invention, mais qui n'est pas unique, sera maintenant décrite à l'aide des figures suivantes :
- la figure 1 est une vue générale, du dessus, du dispositif de convoyage,
- la figure 2 est une vue de côté de la partie nouvelle du dispositif de convoyage,
- et la figure 3 illustre un dispositif de détecteur optique.

### Exposé détaillé de modes de réalisation particuliers

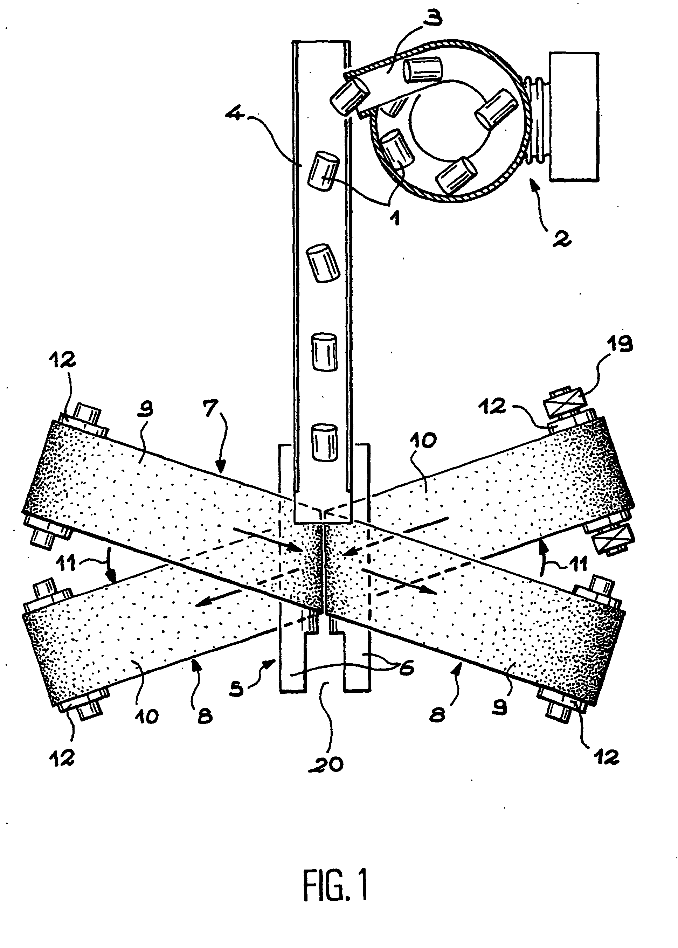

Reportons-nous à la figure 1. Les objets à faire défiler pour les examiner peuvent être des pastilles 1 cylindriques de combustible nucléaire, provenant d'un dispositif d'alimentation quelconque (par exemple d'abord versées dans un bol vibrant 2 et s'en écoulant par une goulotte 3 pour tomber sur une gouttière inclinée où elles s'alignent) ils arrivent sur la portion de convoyage 5 qui est associée au détecteur optique (représenté ailleurs) et qui est spécifique à l'invention.

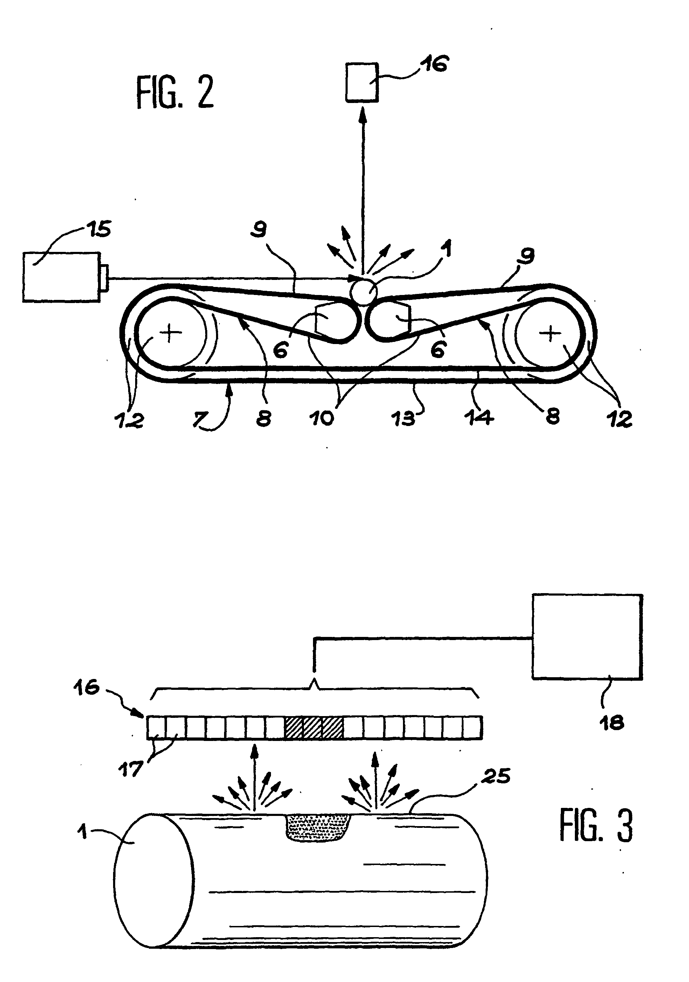

La portion de convoyage 5 comprend une paire de guides 6 parallèles et une boucle sans fin 7 tendue selon une forme complexe. On peut la décomposer virtuellement en une paire de bandes 8 respectivement enroulées et tendues autour des guides-bande 6 et qui comprennent une piste supérieure 9 , et une piste inférieure 10 jointives, sur et, sous les guides 6. Les pistes inférieures 10 et supérieures 9 ne sont pas exactement superposées, mais forment au .contraire un angle 11 qui a la même valeur (en quantité et en signe) pour les deux bandes 8 quand on le mesure de la piste supérieure 9 à la piste inférieure 10 en tournant autour d'un axe vertical. De plus, les pistes supérieures 9 ont la même orientation, et les sens de rotation des bandes 8 autour de leur guide respectif 6 sont les mêmes, comme on le voit bien à la figure 2. Les différentes pistes/bandes ont rigoureusement la même vitesse sans nécessité d'un dispositif de synchronisation puisqu'elles appartiennent physiquement dans cette réalisation à une seule et unique bande. Les guides-bande 6 peuvent être des barres rondes ou des solides arrondis, comme des sabres, c'est-à-dire des supports plats à chant incurvé en demi-cercle.

Il résulte de tout cela qu'une pastille 1 parvenant sur et entre les deux bandes 8 est soumise à un mouvement conjoint de rotation et de translation parfaitement régulier puisque les deux pistes supérieures 9 la déplacent de la même façon, avec une même vitesse en rotation et en translation le long des guides 6. Tout en se déplaçant, la pastille 1 présente donc successivement les portions de sa face latérale à un détecteur, qui l'examine pendant ce temps. Le rapport des vitesses de rotation et de défilement est réglé par la valeur de l'angle 11. Une paire de rouleaux 12 'est utilisée pour chaque bande 8, afin de tendre la piste supérieure 9 et 'la piste inférieure 10 respectivement autour d'eux. Dans cette réalisation, où les bandes 8 appartiennent à une boucle 7 continue, un seul moteur 19, entraînant un des quatre rouleaux 12, est suffisant pour assurer le mouvement de la boucle 7, qui comprend encore deux pistes de raccordement 13 et 14 tendues entre des paires de rouleaux 12 et qui relient respectivement entre elles les pistés supérieures 9 et les pistes inférieures 10. L'unicité de la boucle 7 assure une synchronisation parfaite des vitesses dés bandes 8. Les rouleaux 12 peuvent être montés sur des supports à position réglables sur un bâti (non illustrés) pour régler la valeur de l'angle 11 et la tension des bandes 8. De même, l'écartement entre les deux guides-bande parallèles 6 est réglable, de façon à entraîner/guider au mieux les pastilles en fonction de leur diamètre. Quand elles ont dépassé la boucle 7, les pastilles 1 sont escamotées en tombant dans un bâillement 20 formé entre les guides 6. Elles sont alors récupérées par un dispositif d'évacuation quelconque, non représenté. Notons au passage que le dispositif d'alimentation, qui peut être quelconque, pourrait même dans une certaine mesure être constitué directement par la portion supérieure 8 de la bande en amont de la partie centrale du convoyeur, à condition de déposer correctement les pastilles sur la bande.

La réalisation effective d'une machine d'inspection visuelle utilisant la solution d'une bande unique à double passage et réalisant le double entraînement de pastilles de combustible nucléaire de. forme cylindrique a permis d'obtenir un contrôle à cadence élevée, sans manipulation particulière des pastilles, avec des images de très bonne qualité. Le principe utilisé a conduit à la simplicité de la conception de cette machine et de ses procédures de réglage.

Dans l'application préférentielle où le dispositif de positionnement est appliqué à l'inspection visuelle, le dispositif de détection comprend une source lumineuse 15 dirigée vers la pastille 1 et qui peut émettre un faisceau, plan de préférence, qui illumine une génératrice de celle-ci. Le détecteur 16 consiste en une barrette linéaire de capteurs 17 de luminosité reliés à une caméra 18. Le faisceau de la source 15 frappant la génératrice 25 de la pastille 1 et renvoyé vers le détecteur 16 permet de former une image de cette génératrice, et la caméra 18 fait une compilation des images des génératrices à mesure que la pastille 1 défile pour en donner une image globale. Un capteur placé devant le chemin des pastilles 1 peut être employé pour détecter l'arrivée de celles-ci dans le champ du détecteur 16 et de la caméra 18 et faire commencer les prises de vue. Ces procédés d'acquisition d'image sont connus et ne feront donc pas l'objet d'une description particulière.

Les défauts des pastilles 1 consistent généralement en' des erreurs de dimension ou en des défauts locaux de surface tels des éclats, des fissures, des cavités ouvertes, des marques, des rayures, des piqûres ou en des inclusions de corps étrangers. Dans tous les cas, ils produisent une irrégularité à la surface de la pastille 1. La lumière originaire de la source 15 est dirigée de façon à être renvoyée vers le détecteur 16 quand elle atteint une génératrice normale de la pastille 1. Quand ce n'est pas le cas, la lumière est renvoyée de façon irrégulière, très affaiblie, ou à l'écart de la barrette de capteurs 17.

Deux variantes sont possibles concernant la méthode d'éclairage de l'objet.

Selon une première variante, la lumière peut, conformément à la Figure 2, être une lumière rasante dirigée sur la génératrice supérieure de la pastille 1. Dans les conditions normales, elle est renvoyée vers la barrette de capteurs 17 par diffusion. Si la pastille 1 présente une cavité, une fissure, etc..., la lumière n'est pas à cet endroit interceptée et re-diffusée, et les capteurs 17 correspondants ne sont pas illuminés. Cette méthode donne de très bons résultats, mais nécessite une source puissante (ou un ensemble caméra/objectif très sensible) car l'a lumière diffusée renvoyée par la pastille est assez faible. De plus on doit pouvoir régler finement la position rasante du faisceau lumineux. Selon une seconde variante, la lumière peut être dirigée vers une génératrice quelconque de la pastille 1 et renvoyée par réflexion. Sur une portion régulière de pastille, la lumière est réfléchie avec un maximum d'intensité exactement' dans l'axe d'un capteur bien positionné, mais inversement un défaut de surface ne renvoie plus le faisceau lumineux dans l'axe de ce capteur, et le défaut sera vu beaucoup plus sombre. L'avantage de cette méthode est qu'elle nécessite un éclairage bien moins puissant ; de plus le système est facile à régler, en ajustant la position de la caméra de façon à produire une image quasiment saturée à pleine ouverture de l'objectif.

La synchronisation de la caméra (16) sur les pastilles est obtenue à l'aide d'un micro capteur optique, fonctionnant en. émission/réception, transversalement, à leur déplacement. De tels capteurs, suffisamment connus, ne sont pas représentés.

En plus de l'inspection visuelle, beaucoup d'autres applications sont possibles avec ce dispositif, comme du contrôle utilisant tous types d'autres capteurs : optiques, magnétiques, électriques, ,ultrasons, courant de Foucault, etc.

Le système peut également s'appliquer à tout procédé autre que le contrôle n'exerçant pas d'effort important sur l'objet de révolution à traiter.

Plus généralement, le dispositif permet l'entraînement d'objets de forme quelconque des lors qu'ils ont une symétrie de révolution (tels que des objets cylindriques, sphériques, ...).

## Revendications

1. Dispositif de mise en défilement continu d'objets à symétrie de révolution (1) comprenant un convoyeur (5), **caractérisé en ce que** le convoyeur comprend deux guides (6) parallèles, et au moins une paire de bandes (8) respectivement tendues sur les guides, entre et sur lesquelles ces objets circulent au niveau des guides, ces bandes formant un angle (11) entre une piste supérieure et une piste inférieure de chacune des bandes, les bandes de la paire ayant un même sens de rotation autour des guides, une même valeur de l'angle (11) mesurée de la piste supérieure à la piste inférieure, et une même vitesse de déplacement.

2. Dispositif de mise en défilement selon la revendication 1, **caractérisé en ce que** les bandes de la paire appartiennent à une même boucle continue (7), les pistes inférieures (10) comme les pistes supérieures (9) étant en prolongement, deux pistes de raccordement (13, 14.) reliant respectivement les pistes inférieures et les pistes supérieures.

3. Dispositif de mise en défilement selon l'une quelconque des revendications 1 ou 2, **caractérisé en ce qu'**il est associé à un détecteur (16) consistant en un capteur ou une rangée de capteurs (17) parallèles aux guides (6) et sensibles à une lumière réfléchie ou diffusée par les objets (1).

4. Dispositif de mise en défilement selon la revendication 3, **caractérisé en ce que** la lumière est rasante, dirigée sur la génératrice supérieure de l'objet, et renvoyée par diffusion vers la barrette de capteurs 17.

5. Dispositif de mise en défilement selon la revendication 3, **caractérisé en ce que** la lumière, est dirigée vers une génératrice quelconque de l'objet 1 et renvoyée par réflexion vers la barrette de capteurs (17).

6. Dispositif de mise en défilement selon l'une quelconque des revendications 1 ou 2, **caractérisé en ce qu'**il comporte, sur le cheminement des objets (1) un capteur, apte à signaler à la caméra qu'un objet vient d'être positionné dans son champ.

7. Dispositif de mise en défilement selon l'une quelconque des revendications 1 à 6, **caractérisé en ce qu'**il est associé à un système de détection (16) de défauts des objets (1)

8. Application du dispositif de mise en défilement selon l'une quelconque des revendications 1 à 6 au contrôle optique de pastilles de combustible nucléaire.

## Claims

1. Device for controlling continuous movement of objects with symmetry of revolution (1) comprising a conveyor (5), **characterized in that** the conveyor comprises two parallel guides (6) and at least one pair of belts (8) stretched over the guides, between and on which these objects travel at the same level as the guides, these belts forming an angle (11) between an upper track and a lower track of each of the belts, the belts in the pair having the same direction of rotation about the guides, the same value of the measured angle (11) from the upper track to the lower track, and the same displacement speed.

2. Device for controlling continuous movement according to claim 1, **characterized in that** the belts in the pair form part of the same continuous loop (7), the lower tracks (10) and the upper tracks (9) being continuous with each other, the two connection tracks (13, 14) connecting the lower tracks and the upper tracks respectively.

3. Device for controlling continuous movement according to either of claims 1 or 2, **characterized in that** it is used with a detector (16) consisting of a sensor or a row of sensors (17) parallel to the guides (6) and sensitive to a light reflected or scattered by the objects (1).

4. Device for controlling continuous movement according to claim 3, **characterized in that** the light is grazing, aimed at the upper generating line of the object and reflected by diffusion to the strip of sensors 17.

5. Device for controlling continuous movement according to claim 3, **characterized in that** the light is directed towards any generating line of the object 1 and reflected to the strip of sensors (17).

6. Device for controlling continuous movement according to any one of claims 1 and 2, **characterized in that** it comprises a sensor on the path of the objects (1) that is capable of signalling to the camera that an object has just been positioned in its field.

7. Device for controlling continuous movement according to any one of claims 1 to 6, **characterized in that** it is associated with a system (16) for detection of defects in objects (1).

8. Application of the device for controlling continuous movement according to any one of claims 1 to 6, to the optical inspection of nuclear fuel pellets.

## Patentansprüche

1. Vorrichtung zur kontinuierlichen Aufreihung bzw. Vorbeiführung rotationssymmetrischer Gegenstände (1), eine Fördereinrichtung (5) umfassend,
**dadurch gekennzeichnet, dass** die Fördereinrichtung zwei parallele Führungen (6) und wenigstens ein Paar jeweils über die Führungen gespannter Bänder (8) umfasst, zwischen und auf denen diese Gegenstände in Höhe der Führungen zirkulieren, wobei diese Bänder einen Winkel (11) zwischen einer oberen Bahn und einer unteren Bahn jedes Bands bilden und die Bänder des Paars eine selbe Rotationsrichtung um die Führungen herum, einen selben Wert des Winkels (11), gemessen von der oberen Bahn zur unteren Bahn, und eine salbe Verschiebungsgeschwindigkeit haben.

2. Vorrichtung zur kontinuierlichen Aufreihung bzw. Vorbeiführung nach Anspruch 1, **dadurch gekennzeichnet, dass** die Bänder des Paars zu einer selben endlosen Schleife (7) gehören, wobei die unteren Bahnen (10) sowie die oberen Bahnen (9) sich verlängern und zwei Verbindungsbahnen (13, 14) jeweils die unteren und die oberen Bahnen verbinden.

3. Vorrichtung zur kontinuierlichen Aufreihung bzw. Vorbeiführung nach einem der Ansprüche 1 oder 2, **dadurch gekennzeichnet, dass** sie einem Detektor (16) zugeordnet ist, gebildet durch einen Sensor oder eine Reihe von Sensoren (17), die parallel sind zu den Führungen (6) und empfindlich für ein durch die Gegenstände (1) reflektiertes oder zerstreutes Licht.

4. Vorrichtung zur kontinuierlichen Aufreihung bzw. Vorbeiführung nach Anspruch 3, **dadurch gekennzeichnet, dass** das Licht ein Streiflicht ist, das auf die obere Mantellinie des Gegenstands gerichtet ist und als Streulicht in Richtung Sensoren (17) reflektiert wird.

5. Vorrichtung zur kontinuierlichen Aufreihung bzw. Vorbeiführung nach Anspruch 3, **dadurch gekennzeichnet, dass** das Licht auf eine beliebige Mantellinie des Gegenstands (1) gerichtet ist und in Richtung Sensoren (17) reflektiert wird.

6. Vorrichtung zur kontinuierlichen Aufreihung bzw. Vorbeiführung nach einem der Ansprüche 1 oder 2, **dadurch gekennzeichnet, dass** sie am Weg des Gegenstands (1) einen Sensor umfasst, der fähig ist, der Kamera zu signalisieren, dass in ihrem Feld soeben ein Gegenstand positioniert worden ist.

7. Vorrichtung zur kontinuierlichen Aufreihung bzw. Vorbeiführung nach einem der Ansprüche 1 bis 6, **dadurch gekennzeichnet, dass** sie einem System (16) zur Detektion von Fehlem der Gegenständen (1) zugeordnet ist.

8. Verwendung der Vorrichtung zur kontinuierlichen Aufreihung bzw. Vorbeiführung nach einem der Ansprüche 1 bis 6 zur optischen Kontrolle von Kembrennstofftabletten.
